(19) Europäisches Patentamt / European Patent Office / Office européen des brevets

(11) **EP 1 308 750 B1**

(12) **EUROPÄISCHE PATENTSCHRIFT**


(45) Veröffentlichungstag und Bekanntmachung des Hinweises auf die Patenterteilung:
**24.11.2010 Patentblatt 2010/47**

(51) Int Cl.:
***G01S 15/88*** *(2006.01)* ***G01S 7/521*** *(2006.01)*
***G01S 15/02*** *(2006.01)*

(21) Anmeldenummer: **02017330.8**

(22) Anmeldetag: **02.08.2002**


(54) **Verfahren und Anordnung zur Abstands- und Druckmessung innerhalb einer Luftfeder**

Method and device for measuring distance and pressure inside an air spring

Procédé et dispositif de mesure de distance et de pression dans l'intérieur d'un ressort pneumatique


(84) Benannte Vertragsstaaten:
**AT BE BG CH CY CZ DE DK EE ES FI FR GB GR IE IT LI LU MC NL PT SE SK TR**

(30) Priorität: **18.10.2001 DE 10151593**

(43) Veröffentlichungstag der Anmeldung:
**07.05.2003 Patentblatt 2003/19**



(73) Patentinhaber: **ContiTech Luftfedersysteme GmbH**
**30165 Hannover (DE)**

(72) Erfinder: **Reck, Siegfried, Dr.**
**31582 Nienburg (DE)**

(74) Vertreter: **Finger, Karsten et al**
**Continental Aktiengesellschaft**
**Patente und Lizenzen**
**Postfach 169**
**30001 Hannover (DE)**



(56) Entgegenhaltungen:
**EP-A- 0 844 116** **EP-A- 0 957 373**
**DE-A- 19 811 982** **US-A- 4 597 293**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).




Printed by Jouve, 75001 PARIS (FR)

## Beschreibung

Die Erfindung betrifft ein Ultraschall-Verfahren zur Druckmessung innerhalb einer Luftfeder und die Verwendung des Messergebnisses zur Korrektur in einem Abstandsmessverfahren. Außerdem betrifft die Erfindung eine zur Durchführung des Verfahrens vorgesehene Anordnung, die aus einem piezokeramischen Ultraschallwandler, einem Reflektor, einem Referenzreflektor und einer Elektronik besteht - gemäß den Oberbegriffen der Ansprüche 1 und 7.

In der europäischen Patentanmeldung EP 0 957 373 A2 ist eine Anordnung und ein Verfahren zur berührungslosen Abstands- und Druckmessung innerhalb einer Luftfeder beschrieben. Beide Messgrößen werden nach dem Impuls-Echo-Verfahren mit Hilfe von Ultraschall-Impulsen ermittelt, die sich innerhalb des Luftfederbalgs ausbreiten. Aus den Laufzeiten der Schallimpulse zu einem ersten Referenzreflektor und einem Zielreflektor wird der Abstand zwischen dem Ultraschallwandler und dem Zielreflektor berechnet. Mit Hilfe eines zweiten Referenzreflektors in definiertem Abstand zu dem ersten Referenzreflektor wird der statische Balgdruck bestimmt. Zu diesem Zweck hält eine Regelungseinheit die Amplitude des ersten Echos konstant. Aus dem Verhältnis der Amplituden des ersten und zweiten Referenzechos wird die Dämpfungskonstante der Luft und daraus wiederum der Druck berechnet.

Aus theoretischen Überlegungen ergibt sich, dass dieses Druck-Messverfahren nicht besonders empfindlich und damit ziemlich ungenau ist. Ein weiterer Nachteil besteht in dem relativ großen technischen Aufwand: Es werden zwei Referenzreflektoren und eine Regeleinheit für die Sendeleistung benötigt.

Aus der EP 0 844 116 A1 ist eine Kraftfahrzeugluftfeder bekannt, die eine Ultraschallabstandsmessanordnung aufweist. Mit Hilfe der Messanordnung kann der Abstand zwischen der Abdeckplatte der Luftfeder und dem Abrollkolben der Luftfeder zuverlässig gemessen werden. Es ist der genannten Druckschrift jedoch nicht zu entnehmen, wie mit Hilfe der Messanordnung der Luftdruck in der Luftfeder gemessen werden könnte.

Aus der US 4,597, 293 ist eine Anordnung bekannt, die eine akustische Fehlanpassung dazu nutzt, den Kontrast in einem akustischen Abtastmikroskop zu erhöhen. In der Druckschrift findet sich jedoch kein Hinweis darauf, wie mit Hilfe der Anordnung der Luftdruck in einer Luftfeder gemessen werden könnte.

Es soll nun eine preiswerte und präzise funktionierende Methode zur Messung des statischen Balgdrucks in einer Luftfeder beschrieben werden, wobei der gemessene Balgdruck auch zur Druckkorrektur in einem an sich bekannten Abstands-Messverfahren zu verwenden sein soll.

Diese Aufgabe wird im wesentlichen mit den Merkmalen des Anspruchs 1 gelöst. Bevorzugte Ausgestaltungen ergeben sich aus den Unteransprüchen.

Das im folgenden beschriebene Verfahren zur Druckmessung innerhalb einer Luftfeder mit Hilfe von Ultraschall arbeitet nach dem Impuls-Echo-Prinzip. Mit Hilfe eines Schallwandlers wird Ultraschall in die Luftfeder abgestrahlt, der nach einer bekannten Referenzstrecke reflektiert wird. Ausgewertet wird sowohl die Laufzeit des Echos als auch die Amplitude des elektrischen Echosignals, die von den Übertragungseigenschaften der Referenzstrecke abhängt, insbesondere von der Transmission von Schallenergie zwischen dem Schallwandler und der Luft.

Das Messverfahren beruht darauf, dass die Transmission T von Schallenergie über die Grenzschicht zwischen zwei verschiedenen Medien von deren akustischen Impedanzen abhängt:

$$T = 2Z_1/(Z_1+Z_0). \qquad (1)$$

Die akustische Impedanz Z eines Mediums ist das Produkt aus dessen spezifischer Dichte ρ und der Geschwindigkeit c, mit der sich Schallwellen darin ausbreiten:

$$Z = \rho \cdot c. \qquad (2)$$

Aufgrund des Gasgesetzes bestimmt der Balgdruck p in der Luftfeder die Dichte ρ der in dem Volumen V eingeschlossenen Luft (bei konstanter Temperatur):

$$pV = (\mathrm{const})_1 = (\mathrm{const})_2 \cdot p/\rho$$
$$\Rightarrow \rho = (\mathrm{const})_3 \cdot p. \qquad (3)$$

Wenn die akustische Impedanz $Z_0$ des Schallwandlers wesentlich größer ist als die Impedanz $Z_1$ der Luft,

ergibt sich aus den Gleichungen (1) bis (3) ein nahezu linearer Zusammenhang zwischen dem Druck p in der Feder und dem Transmissionsfaktor T, der die Amplitude des elektrischen Echo-Signals bestimmt.

D. h.: Das erfindungsgemäße Verfahren zur Messung des Balg-Innendrucks beruht nicht auf den druckabhängigen Übertragungseigenschaften der Luft, sondern darauf, dass die Übertragung von Schallleistung von einem Wandlerelement an die Luft von dem statischen Druck in der Luftfeder abhängt.

Die zur Durchführung des Verfahrens vorgesehene Anordnung besteht aus einem piezokeramischen Ultraschallwandler, einem Referenzreflektor und einer Elektronik, die sowohl die Laufzeiten der Echos als auch ihre Signalamplituden auswerten kann.

Die Ultraschallwellen werden von einem piezokeramischen Wandlerelement erzeugt, dessen akustische Impedanz um fünf Zehnerpotenzen höher liegt als die Impedanz der Luft bei Umgebungsdruck. Aufgrund dieser krassen Fehlanpassung werden bei herkömmlichen Ultraschall-Messanordnungen die Schallwellen innerhalb der Piezokeramik an der Grenzschicht zur Luft fast vollständig reflektiert und nur ein Bruchteil der Schallleistung wird an die Luft übertragen. Deshalb haben Ultraschallwandler für Anwendungen bei Umgebungsdruck eine sogenannte Anpassungsschicht.

Um eine Leistungsanpassung und damit eine optimale Signalübertragung zu erzielen, muss die Dicke der Anpassungsschicht genau ein Viertel der Wellenlänge betragen. Außerdem muss die akustische Impedanz des verwendeten Materials dem geometrischen Mittel aus den Impedanzen der Luft und der Piezokeramik entsprechen. Die Verwendung eines Ultraschall-Wandlers mit Anpassungsschicht ist für die Abstandsmessung in einer Luftfeder bekannt (DE-OS 198 11 982 A1).

Die Lehre der vorliegenden Druckmessmethode basiert darauf, dass die Anpassungsschicht bei Umgebungsdruck bewusst fehlangepasst ist. Auf diese Weise erhält man eine nahezu lineare Amplituden/Druck-Kennlinie, die erfindungsgemäß zur Bestimmung des Drucks ausgewertet wird.

Mit dem Druck in der Luftfeder steigt die Dichte des Mediums und damit seine akustische Impedanz, so dass der Transmissionsfaktor und damit die Signalintensität des ersten Referenzechos mit dem Druck ansteigt. Um aus der Änderung der Signalamplitude den Druck zu ermitteln, kann die Messanordnung bei Umgebungsdruck kalibriert werden.

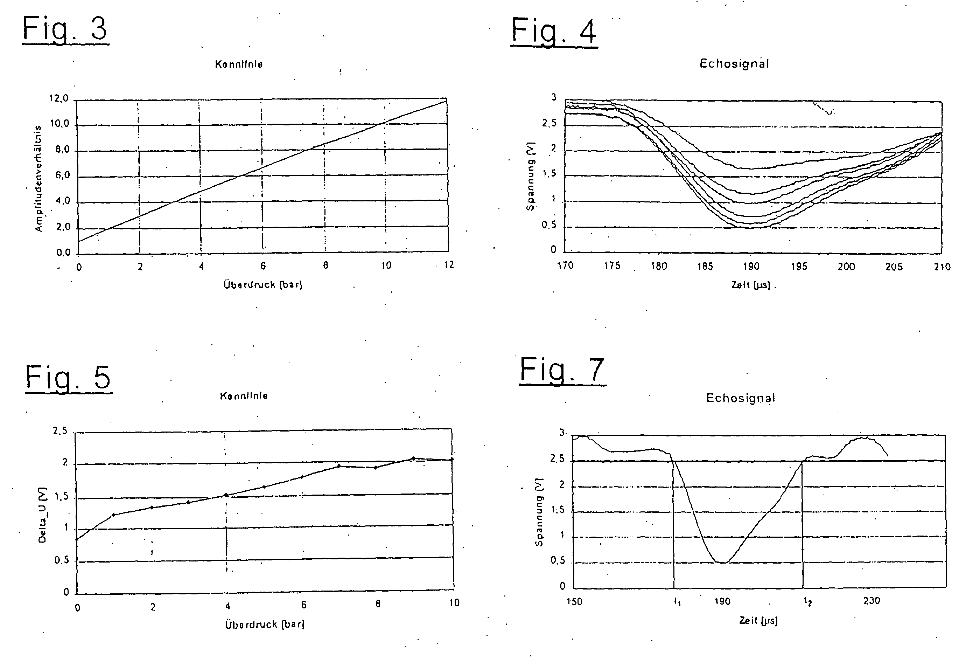

Wenn die akustische Impedanz der Anpassungsschicht um den Faktor 10 höher liegt als die Impedanz der Luft bei Umgebungsdruck, ergibt sich theoretisch eine nahezu lineare Kennlinie für das Amplitudenverhältnis in Abhängigkeit des Drucks (Fig. 3).

Im Unterschied zu der in der EP 0 957 373 A2 beschriebenen Anordnung, die zwei Referenzreflektoren enthält, benötigt das erfindungsgemäße Verfahren lediglich einen Referenzreflektor, der nicht nur für die Druckmessung verwendet wird sondern auch für eine druckkorrigierte Höhenmessung verwendet werden kann. Ein zweiter Reflektor ist nicht erforderlich.

Der Zusammenhang zwischen Druck und dem Amplitudenverhältnis ist bei dem hier vorgestellten Verfahren wesentlich stärker als bei dem Verfahren nach der o. g. Druckschrift. Dadurch sinkt der Aufwand bei der Auswertung.

Gemäß einer bevorzugten Ausführungsform enthält die Elektronikschaltung einen logarithmischen Verstärker, der die Dynamik des Signals komprimiert. Das elektrische Ausgangssignal dieser Schaltung ist invertiert und bezieht sich auf ein Nullpotential von 2,5 V (Fig. 4). Die Abbildung zeigt den elektrischen Verlauf des Referenzsignals bei Umgebungsdruck sowie bei Überdrücken von 2 bar, 4 bar, 6 bar, 8 bar und 10 bar. Das relative Minimum der Signalspannung verschiebt sich in Abhängigkeit des Drucks (Fig. 5). Wegen der logarithmischen Eigenschaften des Verstärkers verläuft diese Kennlinie relativ flach.

Im folgenden werden Aufbau und Wirkungsweise der erfindungsgemäßen Messanordnung anhand eines Ausführungsbeispiels beschrieben. Es zeigt:

- Fig. 1 einen Längsschnitt durch eine mit Messanordnung versehene Luftfeder;
- Fig. 2 die den Ultraschallwandler betreffenden Einzelheiten, im Längsschnitt;
- Fig. 3 die theoretische Kennlinie der Druckmessung über die Impedanzänderung;
- Fig. 4 das elektrische Echosignal am Ausgang eines logarithmischen Verstärkers;
- Fig. 5 die Änderung der Ausgangsspannung mit dem Druck;
- Fig. 6 ein Blockschaltbild der Signalverarbeitungs-Elektronik;
- Fig. 7 ein Zeit/Spannungs-Diagramm des Echosignals; und
- Fig. 8 die Schaltung zur Amplituden-Auswertung des Referenzsignals.

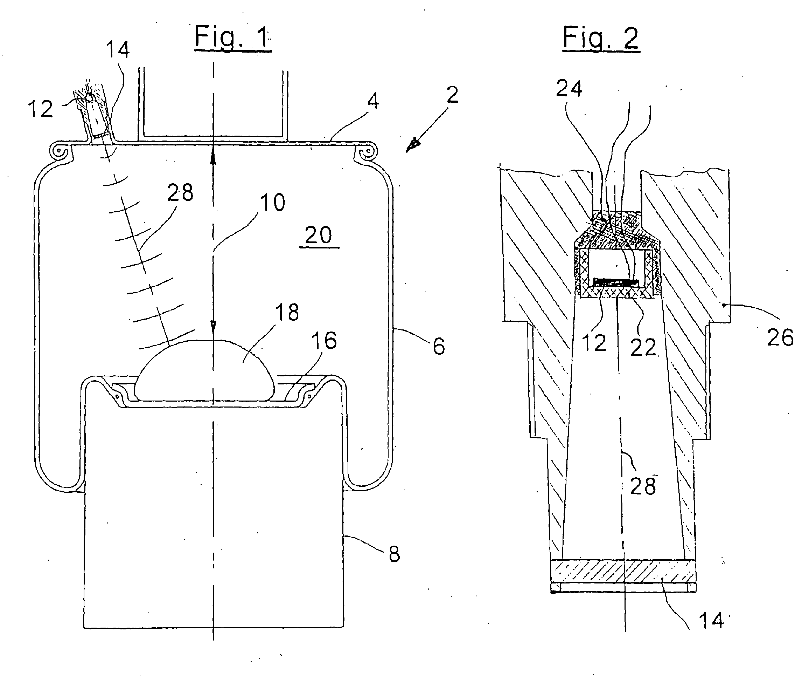

Die in Fig. 1 dargestellte Luftfeder 2 besteht im wesentlichen aus einer Abdeckplatte 4, einem Rollbalg 6 und einem Abrollkolben 8. Die Abdeckplatte 4 ist am Chassis angebracht; der Abrollkolben 8 ist achsseitig (radseitig) befestigt. Beim Einfederungsvorgang rollt der Rollbalg 6 auf dem Abrollkolben 8 ab. Der lichte Abstand 10 zwischen dem Spannteller 16 des Abrollkolbens 8 bzw. einem Puffer 18 und der Abdeckplatte 4 hängt vom Einfederungs- und Beladungszustand des Fahrzeugs ab.

Zur Messung dieses Abstands 10 befindet sich an der Abdeckplatte 4 ein als Sender und Empfänger ausgebildeter piezokeramischer Ultraschallwandler 12.

In einem festen Abstand vor dem Ultraschallwandler 12 ist ein Referenzreflektor 14 angeordnet, der einfach ein ausgespannter Draht sein kann.

Der Ultraschallwandler 12 ist in Richtung auf den Abrollkolben 8 - bzw. bei Verwendung eines Spanntellers 16 auf diesen - gerichtet. Im vorliegenden Ausführungsbeispiel dient ein auf dem Spannteller 16 angebrachter Puffer 18 als Zielreflektor.

Die den Ultraschallwandler 12 betreffenden Einzelheiten sind aus der Fig. 2 ersichtlich:

Zur besseren Impedanzanpassung an die Luft des Luftfederinnenraums 20 (Fig. 1) ist der Ultraschallwandler 12 mit einer Anpassungsschicht 22 versehen. Die Dicke dieser Anpassungsschicht 22 beträgt eine Viertel-Wellenlänge des verwendeten Ultraschallsignals. Die Impedanz ist aber nicht - wie üblich - durch das geometrische Mittel aus den Impedanzen der Luft und der Piezokeramik 12 gegeben sondern es ist erfindungsgemäß eine bewusste Fehlanpassung gewählt. Dabei ergibt sich eine quasilineare Amplituden/Druck-Kennlinie, die zur Bestimmung des Luftfeder-Innendrucks herangezogen wird.

Die aus Piezo-Kristall bzw. -Keramik 12 und Anpassungsschicht 22 bestehende Einheit ist mit Hilfe einer Vergussmasse 24 in einem Sensorgehäuse 26 befestigt. Dieses Sensorgehäuse 26 weist in Richtung auf den Luftfederinnenraum 20 eine konische oder hornförmige Öffnung auf. Nahe der Öffnung ist ein quer zur Längsachse 28 des Strahls ausgerichtetes Blech angebracht, das als Referenzreflektor 14 dient.

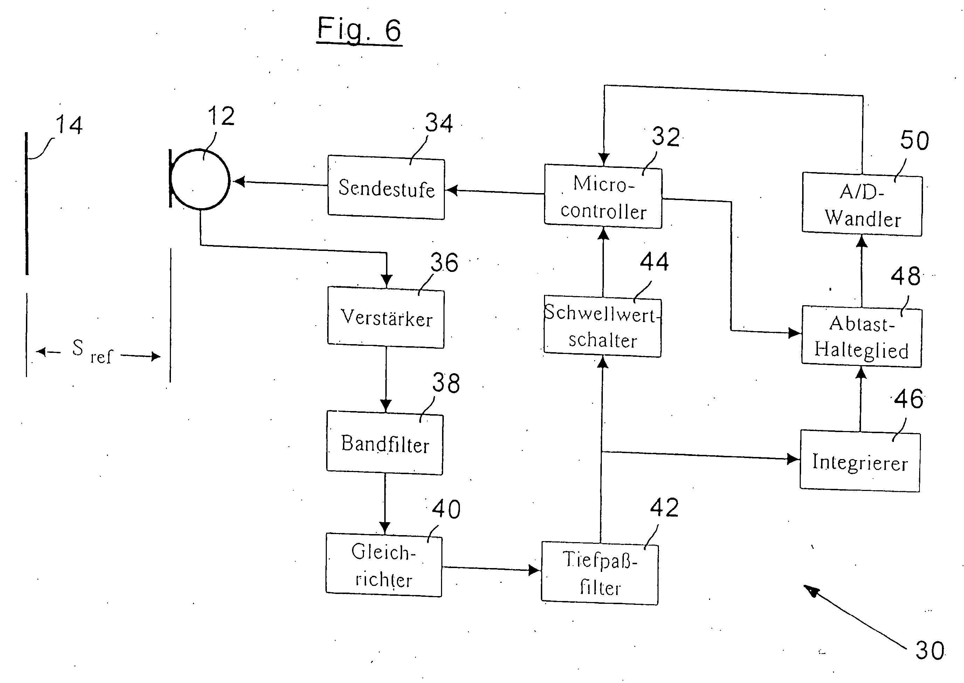

Anhand des in der Fig. 6 dargestellten Blockschaltbildes der Sende- und Empfangs/Auswerte-Elektronik 30 soll die Signalverarbeitung erläutert werden:

Ein Mikro-Controller 32 steuert die Messungen der Echolaufzeit und der Amplitude des Echosignals. Zu Beginn des Messzyklus setzt der Controller 32 die Laufzeitmessung auf Null. Dann aktiviert er eine Sendestufe 34, die die statische Kapazität des piezoelektrischen Wandlers 12 zunächst auf die erforderliche Sendespannung (5V bis 250V) auflädt und anschließend schlagartig entlädt. Dadurch wird die Piezokeramik 12 zu Eigenschwingungen angeregt, die an die Luft übertragen und an einem Referenzbügel 14 reflektiert werden (Referenzstrecke $s_{ref}$).

Nachdem die Eigenschwingungen abgeklungen sind, kann der Schallwandler 12 aufgrund der Reziprozität das eintreffende Echo in ein elektrisches Signal wandeln. Die dabei auftretenden Signalspannungen betragen wenige Mikrovolt. Das Signal wird verstärkt (Verstärker 36) und einem aktiven Bandfilter 38 zugeführt, das auf die Eigenfrequenz des Schallwandlers 12 abgestimmt ist. Ein Gleichrichter 40 und ein nachgeschaltetes Tiefpassfilter 42 extrahieren aus dem amplitudenmodulierten Signal die Einhüllende. Überschreitet die Amplitude dieses Echosignals den eingestellten Schwellenwert (Schwellenwertschalter 44), interpretiert der Mikro-Controller 30 dies als den Zeitpunkt für das Eintreffen des Echos und stoppt die Laufzeitmessung. Aus der gemessenen Laufzeit und der bekannten Länge der Referenzstrecke $S_{ref}$ berechnet er die aktuelle Ausbreitungsgeschwindigkeit des Schalls in der Luftfeder 2.

Um die Druckabhängigkeit der Signalamplitude zu bestimmen, wird das vom Referenzreflektor 14 reflektierte Echosignal (Fig. 7) einem Integrierer 46 zugeführt. Die Spannungs-Zeit-Fläche des Echosignals ist ein Maß für seinen Energieinhalt, der über den Transmissionsfaktor des Wandlers 12 von dem zu messenden Druck in der Luftfeder 2 abhängt.

Der Mikro-Controller 32 tastet das Ausgangssignal des Integrierers 46 ab und erfasst das Messergebnis über einen Analog/Digitalwandler 50.

Das Echosignal verschiebt sich zeitlich in Abhängigkeit der Temperatur. Damit das Echosignal stets richtig verarbeitet wird, führt der Controller 32 die Zeitpunkte für den Beginn und das Ende der Integration ($t_1$ und $t_2$) nach. Grundlage dafür ist die Ausbreitungsgeschwindigkeit, die er in vorangegangenen Messungen bestimmt hat.

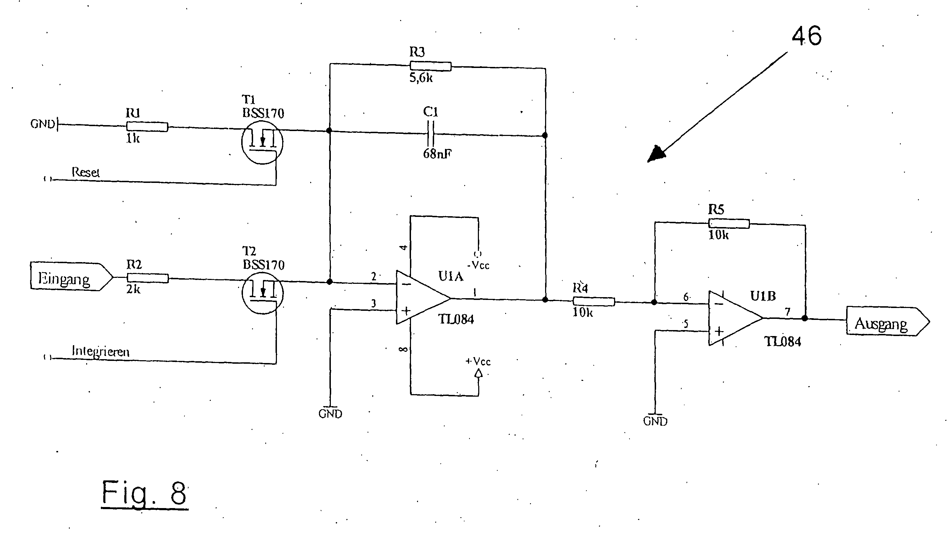

Die Schaltung zur Auswertung der Amplitude des Referenzsignals ist in Fig. 8 wiedergegeben. Es handelt sich dabei um einen steuerbaren Integrierer 46, der die Spannungs-Zeit-Fläche des Referenzsignals bildet.

Beginn und Ende der Integration bestimmt der Mikro-Controller 32 (siehe auch Fig. 6).

**Bezugszeichenliste**

| | |
|---|---|
| 2 | (Kraftfahrzeug-)Luftfeder |
| 4 | (Luftfeder-)Abdeckplatte, (Luftfeder-)Deckel |
| 6 | Rollbalg |
| 8 | Abrollkolben |
| 10 | lichter Abstand Abrollkolben (Puffer) / Abdeckplatte |
| 12 | Ultraschallwandler, Wandler, Piezo-Keramik |
| 14 | Referenzreflektor, Referenzbügel |
| 16 | Spannteller, (Ziel-)Reflektor |
| 18 | Puffer |
| 20 | Luftfeder-Innenraum |
| 22 | Anpassungsschicht |

24 Vergussmasse
26 Sensorgehäuse
28 Längsachse des Strahls
30 Sende- und Empfangs/Auswerte-Elektronik
32 (Mikro-)Controller
34 Sendestufe
$S_{ref}$ Referenzstrecke
36 Verstärker
38 Bandfilter
40 Gleichrichter
42 Tiefpassfilter
44 Schwellenwertschalter
46 Integrierer
48 Abtast-Halteglied
50 Analog/Digitalwandler

**Patentansprüche**

**1.** Verfahren zur Bestimmung des im Innenraum (20) einer Kraftfahrzeug-Luftfeder (2) herrschenden Druckes mit Hilfe einer Ultraschall-Impuls/Echo-Messanordnung, bestehend aus:

- einem an der Luftfeder-Abdeckplatte (4) ortsfest angeordneten Ultraschallwandler (12),
- einem dazu ortsfest angeordneten Referenzreflektor (14),
- einem am Abrollkolben (8) bzw. am Puffer (18) ortsfest angeordneten Zielreflektor (16), und
- einer Sende- und Empfangs/Auswerte-Elektronik (30),

**dadurch gekennzeichnet,**
**dass** die Laufzeit des Referenzsignals gemessen wird und die Schallgeschwindigkeit in der Luftfeder aus der gemessenen Laufzeit und der bekannten Länge der Referenzstrecke berechnet wird und die Amplitude des Referenzsignals ausgewertet wird,
wobei der Ultraschallwandler (12) eine λ/4-Anpassungsschicht (22) aufweist, deren Impedanz nicht dem geometrischen Mittel aus den Impedanzen des Ultraschallwandlers (12) und der Umgebungsluft des Luftfederinnenraums (20) entspricht sondern dass die Impedanz des Ultraschallwandlers (12) wesentlich größer ist als die Impedanz der Luft, so dass eine "Fehlanpassung" und eine nahezu lineare Amplituden/Druck-Kennlinie vorliegt, die zur Bestimmung des Druckes ausgewertet wird.

**2.** Verfahren nach Anspruch 1,
**dadurch gekennzeichnet,**
**dass** das vom Referenzreflektor (14) reflektierte Echosignal einem Integrierer (46) zugeführt wird,
wobei die Spannungs-Zeit-Fläche des Echosignals ein Maß für seinen Energieinhalt ist, der über den Transmissionsfaktor des Wandlers (12) von dem zu messenden Druck in der Luftfeder (2) abhängt.

**3.** Verfahren nach einem der Ansprüche 1 bis 2,
**dadurch gekennzeichnet,**
**dass** die Auswerte-Elektronik (30) zur Ermittlung des Luftfedef-Innendrucks bei Umgebungsdruck kalibriert wird.

**4.** Verfahren nach einem der Ansprüche 1 bis 3,
**dadurch gekennzeichnet,**
**dass** der gemäß einem der Ansprüche 1 bis 3 bestimmte Druck zur Druck-Korrektur einer laufzeitabhängigen Federhöhen-Bestimmung verwendet wird.

**5.** Anordnung zur Durchführung des Messverfahrens nach einem der Ansprüche 1 bis 4,

- mit einem an der Luftfeder-Abdeckplatte (10) ortsfest angeordneten Ultraschallwandler (12),
- mit einem dazu ortsfest angeordneten Referenzreflektor (14),
- mit einem am Abrollkolben (8) bzw. Puffer (18) ortsfest angeordneten Zielreflektor (16), und
- mit einer Sende- und Empfangs/Auswerte-Elektronik (30),

**dadurch gekennzeichnet,**
**dass** die Laufzeit des Referenzsignals messbar ist und die Schallgeschwindigkeit in der Luftfeder aus einer gemessenen Laufzeit und der bekannten Länge der Referenzstrecke bestimmbar ist und die Amplitude des Referenzsignals ausgewertet wird,
wobei der Ultraschallwandler (12) eine λ/4-Anpassungsschicht (22) aufweist, deren Impedanz nicht dem geometrischen Mittel aus den Impedanzen des Ultraschallwandlers (12) und der Umgebungsluft des Luftfederinnenraums (20) entspricht sondern dass die Impedanz des Ultraschallwandlers (12) wesentlich größer ist als die Impedanz der Luft, so dass eine "Fehlanpassung" und eine nahezu lineare Amplituden/Druck-Kennlinie vorliegt, die zur Bestimmung des Druckes ausgewertet wird.

**6.** Anordnung nach Anspruch 5,
**dadurch gekennzeichnet,**
**dass** die akustische Impedanz der λ/4-Anpassungsschicht (22) etwa um den Faktor 10 höher liegt als die der Luft des Luftfeder-Innenraums (20) bei Umgebungsdruck.

**7.** Anordnung nach Anspruch 5 oder 6,
**dadurch gekennzeichnet,**
**dass** die Elektronikschaltung (30) einen logarithmischen Verstärker (36) zur Komprimierung des empfangenen Ultraschallsignals aufweist.

## Claims

**1.** Method for determining the pressure prevailing in the interior (20) of a motor vehicle pneumatic spring (2) using an ultrasonic pulse/echo measuring arrangement, comprising:

- an ultrasonic transducer (12) which is immovably arranged on the pneumatic spring cover plate (4),
- a reference reflector (14) which is immovably arranged relative thereto,
- a target reflector (16) which is immovably arranged on the roll-off piston (8) or on the buffer (18), and
- a transmission and reception/evaluation electronics unit (30),

**characterized**
**in that** the transit time of the reference signal is measured and the speed of sound in the pneumatic spring is calculated from the measured transit time and the known length of the reference path, and the amplitude of the reference signal is evaluated, wherein the ultrasonic transducer (12) has a λ/4 matching layer (22), the impedance of which does not correspond to the geometric mean of the impedances of the ultrasonic transducer (12) and the ambient air of the pneumatic spring interior (20), but rather the impedance of the ultrasonic transducer (12) is substantially greater than the impedance of the air, so that there is a "mismatch" and an almost linear amplitude/pressure characteristic which is evaluated in order to determine the pressure.

**2.** Method according to Claim 1,
**characterized**
**in that** the echo signal reflected by the reference reflector (14) is supplied to an integrator (46), wherein the voltage-time area of the echo signal is a measure of the energy content thereof, which is dependent, via the transmission factor of the transducer (12), on the pressure which is to be measured in the pneumatic spring (2).

**3.** Method according to one of Claims 1 and 2,
**characterized**
**in that** the evaluation electronics unit (30) is calibrated for the purpose of ascertaining the pneumatic spring internal pressure at ambient pressure.

**4.** Method according to one of Claims 1 to 3,
**characterized**
**in that** the pressure determined according to one of Claims 1 to 3 is used for pressure correction for transit-time-dependent spring height determination.

**5.** Arrangement for carrying out the measuring method according to one of claims 1 to 4,

- having an ultrasonic transducer (12) which is immovably arranged on the pneumatic spring cover plate (10),
- having a reference reflector (14) which is immovably arranged relative thereto,
- having a target reflector (16) which is immovably arranged on the roll-off piston (8) or buffer (18), and
- having a transmission and reception/evaluation electronics unit (30),

**characterized**
**in that** the transit time of the reference signal can be measured and the speed of sound in the pneumatic spring can be determined from the measured transit time and the known length of the reference path, and the amplitude of the reference signal is evaluated,
wherein the ultrasonic transducer (12) has a λ/4 matching layer (22), the impedance of which does not correspond to the geometric mean of the impedances of the ultrasonic transducer (12) and the ambient air of the pneumatic spring interior (20), but rather the impedance of the ultrasonic transducer (12) is substantially greater than the impedance of the air, so that there is a "mismatch" and an almost linear amplitude/pressure characteristic which is evaluated in order to determine the pressure.

6. Arrangement according to Claim 5,
**characterized**
**in that** the acoustic impedance of the λ/4 matching layer (22) is higher by approximately a factor of 10 than that of the air of the pneumatic spring interior (20) at ambient pressure.

7. Arrangement according to Claim 5 or 6,
**characterized**
**in that** the electronics circuit (30) has a logarithmic amplifier (36) for compressing the received ultrasonic signal.

## Revendications

1. Procédé pour déterminer la pression qui règne dans l'espace intérieur (20) d'un amortisseur pneumatique (2) de véhicule automobile à l'aide d'un système de mesure par impulsions et échos d'ultrasons constitué de :

- un convertisseur (12) d'ultrasons disposé en position fixe sur la plaque de recouvrement (4) de l'amortisseur pneumatique,
- un réflecteur de référence (14) disposé en position fixe par rapport au convertisseur,
- un réflecteur cible (16) disposé en position fixe sur le piston de déroulement (8) ou le tampon (18) et
- une électronique (30) d'émission et de réception-évaluation,

**caractérisé en ce que**
le temps de parcours du signal de référence est mesuré et la vitesse du son dans l'amortisseur pneumatique est calculée à partir du temps de parcours mesuré et de la longueur connue du parcours de référence, l'amplitude du signal de référence étant évaluée,
**en ce que** le convertisseur (12) d'ultrasons présente une couche d'adaptation λ/4 (22) dont l'impédance ne correspond pas à la moyenne géométrique de l'impédance du convertisseur (12) d'ultrasons et de celle de l'air présent dans l'espace intérieur (20) de l'amortisseur pneumatique et
**en ce que** l'impédance du convertisseur (12) d'ultrasons est beaucoup plus grande que l'impédance de l'air, de sorte que l'on obtient une "erreur d'adaptation" et une ligne caractéristique amplitude-pression presque linéaire qui est évaluée pour déterminer la pression.

2. Procédé selon la revendication 1, **caractérisé en ce que** le signal écho réfléchi par le réflecteur de référence (14) est apporté à un intégrateur (46) et **en ce que** la surface tension-temps du signal d'écho est une mesure de son contenu énergétique qui dépend, par l'intermédiaire du facteur de transmission du convertisseur (12), de la pression à mesurer dans l'amortisseur pneumatique (2).

3. Procédé selon l'une des revendications 1 à 2, **caractérisé en ce que** l'électronique d'évaluation (30) qui sert à déterminer la pression intérieure de l'amortisseur pneumatique est étalonnée à pression ambiante.

4. Procédé selon l'une des revendications 1 à 3, **caractérisé en ce que** la pression déterminée selon l'une des revendications 1 à 3 est utilisée pour la correction de la pression dans la déterminaton de la hauteur de l'amortisseur en fonction du temps de parcours.

**5.** Agencement destiné à exécuter le procédé de mesure selon l'une des revendications 1 à 4, et présentant

- un convertisseur (12) d'ultrasons disposé en position fixe sur la plaque de recouvrement (10) de l'amortisseur pneumatique,
- un réflecteur de référence (14) disposé en position fixe par rapport au convertisseur,
- un réflecteur cible (16) disposé en position fixe sur le piston de déroulement (8) ou le tampon (18) et
- une électronique (30) d'émission et de réception-évaluation,

**caractérisé en ce que**
le temps de parcours du signal de référence peut être mesuré et la vitesse du son dans l'amortisseur pneumatique est calculée à partir du temps de parcours mesuré et de la longueur connue du parcours de référence, l'amplitude du signal de référence étant évaluée,
**en ce que** le convertisseur (12) d'ultrasons présente une couche d'adaptation λ/4 (22) dont l'impédance ne correspond pas à la moyenne géométrique des impédances du convertisseur (12) d'ultrasons et de l'air présent dans l'espace intérieur (20) de l'amortisseur pneumatique et
**en ce que** l'impédance du convertisseur (12) d'ultrasons est beaucoup plus grande que l'impédance de l'air, de sorte que l'on obtient une "erreur d'adaptation" et une ligne caractéristique amplitude-pression presque linéaire qui est évaluée pour déterminer la pression.

**6.** Agencement selon la revendication 5, **caractérisé en ce que** l'impédance acoustique de la couche d'adaptation λ/4 (22) est supérieure d'un facteur d'environ 10 à celle de l'air présent dans l'espace intérieur (20) de l'amortisseur pneumatique à pression ambiante.

**7.** Agencement selon les revendications 5 ou 6, **caractérisé en ce que** le circuit électronique (30) présente un amplificateur logarithmique (36) qui comprime le signal d'ultrasons reçu.

Fig. 2
26
14
22
28
12
24
Fig. 1
2
6
8
4
20
16
18
10
28
14
12

Fig. 3
Kennlinie
Amplitudenverhältnis
12,0
10,0
8,0
6,0
4,0
2,0
0,0
0 2 4 6 8 10 12
Überdruck [bar]
Fig. 4
Echosignal
Spannung [V]
3
2,5
2
1,5
1
0,5
0
170 175 180 185 190 195 200 205 210
Zeit [µs]
Fig. 5
Kennlinie
Delta_U [V]
2,5
2
1,5
1
0,5
0
0 2 4 6 8 10
Überdruck [bar]
Fig. 7
Echosignal
Spannung [V]
3
2,5
2
1,5
1
0,5
0
150 t1 190 t2 230
Zeit [µs]

Fig. 6

14
12
34
Sendestufe
32
Micro-controller
50
A/D-Wandler
36
Verstärker
44
Schwellwert-schalter
48
Abtast-Halteglied
38
Bandfilter
46
Integrierer
40
Gleich-richter
42
Tiefpaß-filter
S ref
30

46
Ausgang
R5
10k
U1B
TL084
GND
R4
10k
R3
5,6k
C1
68nF
U1A
TL084
-Vcc
+Vcc
GND
T1
BSS170
T2
BSS170
R1
1k
R2
2k
GND
Reset
Eingang
Integrieren

Fig. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0957373 A2
- EP 0844116 A1
- US 4597 A
- US 293 A
- DE 19811982 A1